(19) Europäisches Patentamt
European Patent Office
Office européen des brevets

(11) Veröffentlichungsnummer: **0 298 364 B1**

(12) # EUROPÄISCHE PATENTSCHRIFT

(45) Veröffentlichungstag der Patentschrift: **06.10.93**

(51) Int. Cl.⁵: **C08G 77/38**, C08G 18/61, D06M 15/657, D06M 15/653

(21) Anmeldenummer: **88110435.0**

(22) Anmeldetag: **30.06.88**

(54) **Fluor und Polysiloxan enthaltende Urethane, Verfahren zu ihrer Herstellung und ihre Verwendung.**

(30) Priorität: **07.07.87 DE 3722375**

(43) Veröffentlichungstag der Anmeldung:
**11.01.89 Patentblatt 89/02**

(45) Bekanntmachung des Hinweises auf die Patenterteilung:
**06.10.93 Patentblatt 93/40**

(84) Benannte Vertragsstaaten:
**AT BE CH DE FR GB IT LI NL**

(56) Entgegenhaltungen:
**EP-A- 0 253 186**
**FR-A- 1 316 488**
**FR-A- 2 017 122**
**US-A- 4 098 742**

**PATENT ABSTRACTS OF JAPAN, Band 12, Nr. 82 (C-481)[2929], 15. März 1988; & JP-A-62 218 471**

**PATENT ABSTRACTS OF JAPAN, Band 9, Nr. 218 (C-301)[1941], 5. September 1985; & JP-A-60 81 278**

**W. Noll, Chemie und Technologie der Silicone, 1968, Verlag Chemie, Wienheim, Seite 514**

(73) Patentinhaber: **HOECHST AKTIENGESELLSCHAFT**

**D-65926 Frankfurt(DE)**

(72) Erfinder: **Wehowsky, Frank Dr.**
**Talhauser Strasse 27**
**D-8269 Burgkirchen(DE)**
Erfinder: **Liebiger, Martin**
**Frankfurter Strasse 90**
**D-6238 Hofheim am Taunus(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft Fluor und Polysiloxan enthaltende Urethane. Sie betrifft ferner ein Verfahren zur Herstellung dieser Urethane und ihre Verwendung.

Fluor enthaltende Urethane sind beispielsweise in den beiden Druckschriften DE-A1-35 30 967 und DE-A1-35 40 147 beschrieben. Sie werden als Mittel zur hydrophoben und oleophoben Ausrüstung von Textilien und Leder empfohlen.

In der FR-A-2 017 122 werden Fluor und Polysiloxan enthaltende Urethane als Ausrüstungsmittel für Textilien beschrieben, wobei die Fluoralkoholkomponente monofunktionell und die Isocyanatkomponente, im Gegensatz zur vorliegenden Erfindung, bifunktionell ist und das Polysiloxan, im Gegensatz zur vorliegenden Erfindung, aus Monoalkylsiloxaneinheiten besteht.

Fluor und Polysiloxan enthaltende Urethane zur Ausrüstung von Textilien sind ferner in der US-A 4 098 742 beschrieben, wobei die Isocyanatkomponente ebenfalls, im Gegensatz zur vorliegenden Erfindung, ein Diisocyanat ist, während das Polysiloxan hier aus Dialkylsiloxaneinheiten besteht und der Fluoralkohol, im Gegensatz zur vorliegenden Erfindung, ein bifunktioneller ist.

Fluor und Polysiloxan enthaltende Urethane sind auch in der US-A 4 508 916 beschrieben. Diese Urethane enthalten mit Strahlung härtbare Acrylatgruppen und werden als Klebemittel für elektro-optische Systeme empfohlen.

Es wurden nun neue Fluor und Polysiloxan enthaltende Urethane gefunden, die hervorragende Mittel zur Ausrüstung von Textilien darstellen. Sie verleihen den Textilien eine gute Hydrophobie und Oleophobie und zusätzlich dazu überraschenderweise auch noch die weitere besonders gewünschte Eigenschaft des weichen Griffes. Sie sind darüber hinaus auch zur Ausrüstung von Leder, Pelzen und Holz geeignet.

Die erfindungsgemäßen Fluor und Polysiloxan enthaltenden Urethane sind gekennzeichnet durch die folgende Formel 1

$$B-X-R_1-(\overset{R}{\underset{R}{Si}}O)_y-\overset{R}{\underset{R}{Si}}-R_1-X-B' \qquad (1)$$

worin bedeuten

R	$CH_3$ oder $C_2H_5$,
y	eine Zahl von 5 bis 500, vorzugsweise 10 bis 300,
B	einen Rest der folgenden Formel 2

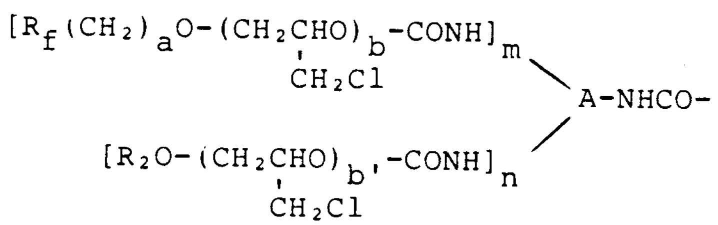

(2)

worin bedeuten

$R_f$	einen Perfluoralkylrest mit 4 bis 20 C-Atomen, vorzugsweise 6 bis 16 C-Atomen, einen ω-H-Perfluoralkylrest mit 4 bis 20 C-Atomen, vorzugsweise 6 bis 16 C-Atomen, oder einen Rest der Formel $R_f' SO_2NR_3$ oder der Formel $R_f' CH_2CH_2SO_2NR_3$, worin $R_f'$ ein Perfluoralkylrest mit 4 bis 20 C-Atomen, vorzugsweise 6 bis 16 C-Atomen, und $R_3$ = H oder ein $C_{1-4}$-Alkyl ist; von diesen Bedeutungen von $R_f$ ist der Perfluoralkylrest mit 4 bis 20 C-Atomen, vorzugsweise 6 bis 16 C-Atomen, bevorzugt,
$R_2$	einen Alkylrest mit 4 bis 20 C-Atomen, vorzugsweise 10 bis 18 C-Atomen,
a	eine ganze Zahl von 1 bis 4, vorzugsweise 2,
b	eine Zahl von 0 bis 10, vorzugsweise 1 bis 5 oder 0,
b'	eine Zahl von 0 bis 10, vorzugsweise 1 bis 5 oder 0,

m eine Zahl von 1 bis 2 und

n eine Zahl von 0 bis 1, wobei die Summe aus m + n 2 ist, vorzugsweise bedeuten m 2 und n 0, und

A einen Rest entsprechend der folgenden Formel 3

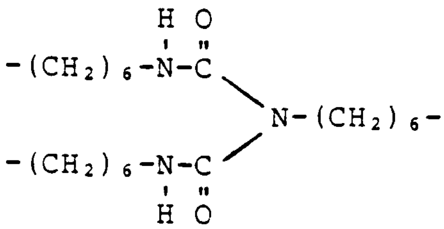 (3)

B' H oder ebenfalls einen Rest der Formel 2,

X O oder $NR_4$, worin $R_4$ = H oder ein $C_{1-4}$-Alkyl ist, und

$R_1$-X einen Rest entsprechend einer der folgenden Formeln 4 bis 7

(4) $-(CH_2)_z-X-$

(5) $-(CH_2)_{z'}O(CH_2)_z-X-$

(6) $-(CH_2)_{z'}NR_4(CH_2)_z-X-$

(7) 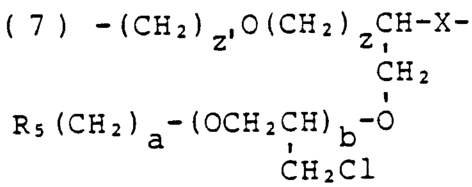

wobei z und z', die gleich oder verschieden sein können, jeweils eine ganze Zahl von 1 bis 10 ist, vorzugsweise 1 bis 5, $R_5$ eine der Bedeutungen von $R_2$ oder von $R_f$ hat und X, $R_4$, a und b die genannten Bedeutungen haben; von den Bedeutungen von $R_1$-X sind jene gemäß den Formeln 4, 6 und 7 bevorzugt.

Der Perfluoralkylrest $R_f$ und der Alkylrest $R_2$ können geradkettig oder verzweigt sein, sie sind vorzugsweise geradkettig. $R_f$ stellt in der Regel ein Gemisch von Perfluoralkylresten mit der oben genannten Anzahl von C-Atomen dar.

Die Herstellung der erfindungsgemäßen Fluor und Polysiloxan enthaltenden Urethane erfolgt dadurch, daß ein Fluoralkohol-Isocyanat-Addukt der folgenden Formel 8

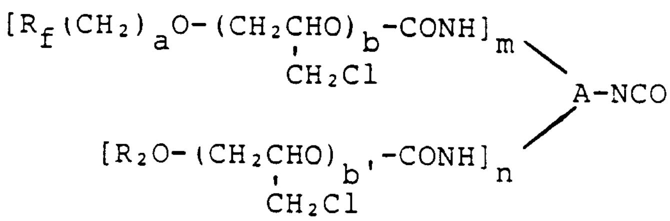 (8)

worin $R_f$, $R_2$, a, b, b', m, n und A die obengenannnten Bedeutungen haben, mit einem Polysiloxan der folgenden Formel 9

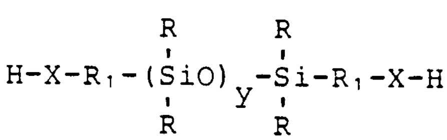 (9)

worin R, X, $R_1$-X und y die obengenannten Bedeutungen haben, im Molverhältnis von 1 bis 2 zu 1 bei einer Temperatur von 30 bis 130 °C, vorzugsweise 50 bis 110 °C, umgesetzt wird.

Die als Ausgangsverbindungen einzusetzenden Polysiloxane sind bekannt und im Handel erhältlich. Sie stellen bei Raumtemperatur mehr oder weniger viskose, farblose Flüssigkeiten dar. Bevorzugte Polysiloxane sind solche, die sich aus Formel 9 ergeben, wenn R, X, $R_1$-X und y die genannten bevorzugten Bedeutungen haben.

Die als Ausgangsverbindungen einzusetzenden Fluoralkohol-Isocyanat-Addukte werden im folgenden näher beschrieben. Jene Addukte, die sich aus Formel 8 ergeben, wenn n = 0, sind aus den eingangs genannten beiden Druckschriften DE-A1-35 30 967 und DE-A1-35 40 147 bekannt. Sie werden durch Umsetzung eines Alkohols der Formel $R_f(CH_2)_a$-OH, worin $R_f$ und a die genannten Bedeutungen haben, mit Epichlorhydrin bei einer Temperatur von 30 bis 100 °C, vorzugsweise 40 bis 70 °C, und durch Umsetzung des so erhaltenen Alkohol-Effichlorhydrin-Adduktes mit dem Isocyanat entsprechend der Formel 3 bei einer Temperatur von 70 bis 150 °C, vorzugsweise 80 bis 130 °C, erhalten. Bei der Umsetzung des Alkohols mit Epichlorhydrin werden die beiden Reaktionskomponenten klarerweise im Molverhältnis von 1 zu b eingesetzt (b hat die in Formel 8 genannte Bedeutung); ebenso werden bei der Umsetzung des Alkohol-Epichlorhydrin-Adduktes mit Isocyanat die beiden Reaktionskomponenten klarerweise in dem Molverhältnis eingesetzt, das sich aus der angestrebten Bedeutung für m in Formel 8 ergibt. Beide Umsetzungen können wie in den genannten beiden Druckschriften ausführlich beschrieben ist, in Gegenwart von Lewis-Säure und unter Verwendung eines organischen Lösungsmittels durchgeführt werden. Beide Umsetzungen verlaufen quantitativ. Die erhaltenen Fluoralkohol-Isocyanat-Addukte stellen bei Raumtemperatur mehr oder weniger wachsartige, gelb gefärbte Produkte dar. Die in Rede stehenden Fluoralkohol-Isocyanat-Addukte ohne Epichlorhydrin, das heißt Addukte gemäß Formel 8 mit n = 0 und b = 0, werden klarerweise durch Umsetzung eines Alkohols der Formel $R_f(CH_2)_a$-OH, worin $R_f$ und a die genannten Bedeutungen haben, direkt mit dem Isocyanat entsprechend der Formel 3 erhalten; diese Umsetzung wird bei den gleichen Bedingungen durchgeführt, wie die oben beschriebene Umsetzung mit Isocyanat. Auch diese Fluoralkohol-Isocyanat-Addukte stellen bei Raumtemperatur mehr oder weniger wachsartige, gelb gefärbte Produkte dar. Jene Addukte, die sich aus Formel 8 ergeben, wenn n nicht 0 ist, werden durch Umsetzung eines Alkohols der Formel

$$R_f(CH_2)_aO-(CH_2\underset{\displaystyle CH_2Cl}{CH}O)_b-H,$$

worin $R_f$, a und b die genannten Bedeutungen haben, und eines Alkohols der Formel

$$R_2O-(CH_2\underset{\displaystyle CH_2Cl}{CH}O)_{b'}-H,$$

worin $R_2$ und b' die genannten Bedeutungen haben, mit einem Isocyanat entsprechend der Formel 3 erhalten. Diese Umsetzung wird ebenfalls unter den Bedingungen der oben beschriebenen Umsetzung mit Isocyanat durchgeführt, das heißt, bei einer Temperatur von 70 bis 150 °C, vorzugsweise 80 bis 130 °C. Die Reaktionskomponenten werden auch hier klarerweise in dem Molverhältnis eingesetzt, das sich aus den angestrebten Bedeutungen für m und n in Formel 8 ergibt. Auch diese Umsetzung, die quantitativ verläuft, kann in Gegenwart von Lewis-Säure und unter Verwendung eines organischen Lösungsmittels durchgeführt werden. Die erhaltenen Fluoralkohol-Isocyanat-Addukte stellen ebenfalls bei Raumtemperatur mehr oder weniger wachsartige, gelb gefärbte Produkte dar. Geeignete Lewis-Säuren als Katalysator für die in Rede stehenden Umsetzungen sind $BF_3$, Bortrifluoriddiethyletherat, $SnCl_4$, $SbCl_5$, $TiCl_4$, $FeCl_3$, $PF_5$ und/oder Dibutylzinndilaurat, wobei Bortrifluoriddiethyletherat und Dibutylzinndilaurat bevorzugt sind. Geeignete Lösungsmittel für die in Rede stehenden Umsetzungen sind halogenierte Kohlenwasserstoffe wie Tetrachlorkohlenstoff (Siedepunkt 77 °C), Dichlorethan (Siedepunkt 84 °C) und Trifluortrichlorethan (Siedepunkt 48 °C), Ketone wie Aceton (56 °C), Methylethylketon (80 °C) und Diethylketon (101 °C), Ether wie Diisopropylether (68 °C), Tetrahydrofuran (66 °C) und Dibutylether (142 °C) und Ester wie Ethylacetat (77 °C) und Butylacetat (123 °C).

Zur Herstellung der erfindungsgemäßen Urethane werden (je nach angestrebter Urethanverbindung) 1 bis 2 mol Fluoralkohol-Isocyanat-Addukt und etwa 1 mol Polysiloxan bei einer Temperatur von 30 bis 130

°C, vorzugsweise 50 bis 110 °C, umgesetzt. Die Umsetzung verläuft quantitativ. Sie wird vorzugsweise unter Verwendung eines organischen Lösungsmittels durchgeführt. Die oben genannten Lösungsmittel sind auch hier geeignet. Die Menge an Lösungsmittel wird auch hier so gewählt, daß eine gut rührbare Mischung vorliegt. Die Reaktionszeit beträgt im allgemeinen etwa 5 bis 15 Stunden. Nach Beendigung der Umsetzung und dem Abdestillieren des eingesetzten Lösungsmittels liegt die angestrebte erfindungsgemäße Urethanverbindung vor. Es ist bevorzugt, die Umsetzung in Form einer Hauptreaktion und einer Nachreaktion durchzuführen. In der Hauptreaktion werden die beiden Reaktionskomponenten, Fluoralkohol-Isocyanat-Addukt und Polysiloxan, unter Verwendung von Lösungsmittel bei einer Temperatur von vorzugsweise 50 bis 80 °C nahezu vollständig umgesetzt, worauf das Lösungsmittel abdestilliert wird. In der Nachreaktion wird das vom Lösungsmittel befreite Reaktionsprodukt bei einer Temperatur von vorzugsweise 90 bis 110 °C so lange gehalten, bis die Umsetzung vollständig beendet ist und damit die angestrebte erfindungsgemäße Urethanverbindung vorliegt.

Die neuen Fluor und Polysiloxan enthaltenden Urethane werden gemäß Erfindung zur Ausrüstung von Textilien verwendet. Sie verleihen den Textilien eine hervorragende Hydrophobie und Oleophobie und darüber hinaus auch noch die weitere, besonders gewünschte Eigenschaft des weichen Griffes. Das Textilmaterial kann natürlicher oder synthetischer Natur sein. Es besteht vorzugsweise aus Baumwolle, Polyamid, Polyester und/oder Polyacrylnitril. Das Textilmaterial kann in beliebiger Form vorliegen, so zum Beispiel als Faden, Faser, Garn, Flocke, Gewebe, Teppich oder Vlies. Die Auftragsmenge an erfindungsgemäßer Verbindung wird so gewählt, daß auf dem Textilmaterial 0,05 bis 1,5 Gew.-% Fluor, vorzugsweise 0,1 bis 0,8 Gew.-% Fluor, vorhanden sind, Gewichtsprozente bezogen auf das behandelte Textilmaterial. Das Aufbringen der erfindungsgemäßen Urethane auf das Textilmaterial erfolgt in der Regel während einer der üblichen Textilbehandlungen mit Präparationsmitteln, wobei das erfindungsgemäße Urethan dem Präparationsmittel einverleibt worden ist, oder mit Hilfe von Lösungen, Emulsionen oder Dispersionen, die aus den Urethanen eigens bereitet worden sind. In den Textilbehandlungspräparationen, beispielsweise Spinnpräparationen, liegen die erfindungsgemäßen Urethane in einer Konzentration von 0,5 bis 5 Gew.-% vor, vorzugsweise 1 bis 3 Gew.-%. In den Lösungen, Emulsionen oder Dispersionen liegen sie in einer Konzentration von 5 bis 40 Gew.-% vor, vorzugsweise 8 bis 30 Gew.-%. Die Behandlung der Textilien mit den Lösungen, Emulsionen oder Dispersionen wird nach üblichen Methoden durchgeführt, so zum Beispiel durch Sprühen, Tauchen, Foulardieren und dergleichen. Anschließend wird das getränkte Textilmaterial getrocknet und einer Wärmebehandlung unterworfen. Die Wärmebehandlung (auch Kondensation genannt) wird in der Regel in der Weise durchgeführt, daß das Textilmaterial auf eine Temperatur von 130 bis 200 °C erhitzt und bei dieser Temperatur 10 Sekunden bis 10 Minuten lang gehalten wird. Das mit den erfindungsgemäßen Urethanen ausgerüstete Textilmaterial besitzt die oben erwähnten hervorragenden Eigenschaften.

Die Erfindung wird nun an Beispielen noch näher erläutert.

Erfindungsgemäße Verbindungen

Beispiel 1 (nicht erfindungsgemäß)

In einem mit einem Rührer, Rückflußkühler, Thermometer, Tropftrichter und Heizbad ausgestatteten Glaskolben wurden 80 g (0,16 mol) von einem im Handel erhältlichen Perfluoralkylethanol-Gemisch mit Perfluoralkyl = $C_8F_{17}$-$C_{16}F_{33}$ (OH-Zahl = 106), 80 g 1,2,2-Trifluortrichlorethan ($CFCl_2$-$CF_2Cl$) als Lösungsmittel und 0,5 g Bortrifluoriddiethyletherat als Katalysator (das sind 0,6 Gew.-% Katalysator, bezogen auf Perfluoralkylethanol) vorgelegt. Zu dieser Lösung wurden bei 45 °C 29 g (0,32 mol) Epichlorhydrin unter Rühren zugetropft, worauf 3 Stunden lang bei Rückflußtemperatur (das sind 50 - 55 °C) gehalten wurde. Anschließend wurde das Lösungsmittel im Vakuum (Wasserstrahlvakuum) abdestilliert. Der so erhaltene Fluoralkohol, ein wachsartiges, gelb gefärbtes Produkt, entspricht der folgenden Formel:

$$(C_8F_{17}-C_{16}F_{33})-CH_2CH_2O-(\underset{\displaystyle CH_2Cl}{CH_2CHO})_2-H$$

(der Wert 2 für die Epichlorhydrin-Einheiten ist ein Mittelwert aus 1 bis 8 angelagerten Epichlorhydrin-Einheiten).

In allen weiteren Beispielen, in denen ein Epichlorhydrin enthaltender Alkohol zur weiteren Umsetzung mit Isocyanat eingesetzt wurde, wurde dieser in analoger Weise bereitet.

Die Umsetzung des Fluoralkohols mit Isocyanat zum Fluoralkohol-Isocyanat-Addukt und die Umsetzuno dieses Adduktes mit Polysiloxan erfolgte in einem mit Rührer, Rückflußkühler, Thermometer und Heizbad ausgestatteten Glaskolben. Es wurden 67,9 g (0,1 mol) Fluoralkohol und 17,4 g (0,1 mol) Toluylendiisocyanat (ein als Handelsprodukt erhältliches Gemisch aus etwa 80 Gew.-% 2,4- und etwa 20 Gew.-% 2,6-Toluylendiisocyanat) vorgelegt und 4 Stunden lang bei 110 °C unter Rühren gehalten. Zur Mischung wurden nun 4 Tropfen Dibutylzinndilaurat dazugegeben, worauf sie zur Nachreaktion 3 Stunden lang bei 110 °C unter Rühren gehalten wurde. Das erhaltene Fluoralkohol-Isocyanat-Addukt war ein wachsartiges, gelb gefärbtes Produkt. Zur Umsetzung des Adduktes mit Polysiloxan wurde das im Glaskolben befindliche Addukt nach Abkühlung mit Aceton (etwa 50 bis 150 ml) als Lösungsmittel versetzt. Zur Lösung wurden 57,7 g (0,05 mol) Polysiloxan der Formel

$$HOCH_2CH_2CH_2-(\overset{CH_3}{\underset{CH_3}{Si}}O)_{12,2}-\overset{CH_3}{\underset{CH_3}{Si}}-CH_2CH_2CH_2OH$$

gelöst in Aceton (etwa 50 bis 150 ml), dazugegeben. Die Mischung wurde unter Rühren 2 Stunden lang bei Rückflußtemperatur (das sind 60 bis 70 °C) gehalten und dabei das Alkohol-Isocyanat-Addukt mit dem Polysiloxan umgesetzt. Nach den 2 Stunden Reaktionszeit wurde das Lösungsmittel Aceton abdestilliert und der Glaskolbeninhalt zur Nachreaktion unter Rühren 5 Stunden lang bei 110 °C gehalten. Die so erhaltene Urethanverbindung (Ausbeute 98,6 % der Theorie) war ein wachsartiges, braun gefärbtes Produkt. Die Bruttozusammensetzung des Urethans entspricht der in der Tabelle nach den Beispielen angegebenen Formel Nummer 1.

Beispiel 2

Ansatz:
135,8 g (0,2 mol) Fluoralkohol wie im Beispiel 1 hergestellt
57,0 g (0,1 mol) Triisocyanat entsprechend Formel 3 (ein als Handelsprodukt erhältliches Gemisch aus den drei Isocyanaten entsprechend den Resten der Formeln

$$-(CH_2)_6-\overset{H}{N}-\overset{O}{\overset{\|}{C}}-\overset{H}{N}-(CH_2)_6- ,$$

$$-(CH_2)_6-\overset{H}{N}-\overset{O}{\overset{\|}{C}}-\overset{H}{N}-(CH_2)_6-\overset{H}{N}-\overset{O}{\overset{\|}{C}}-\overset{H}{N}-(CH_2)_6-$$

und Formel 3 mit dem Triisocyanat als Hauptbestandteil)
57,7 g (0,05 mol) Polysiloxan wie im Beispiel 1
Durchführung: wie im Beispiel 1
Die erhaltene erfindungsgemäße Urethanverbindung (Ausbeute 97,0 % der Theorie) war ein wachsartiges, braun gefärbtes Produkt. Die Bruttozusammensetzung des erfindungsgemäßen Urethans entspricht der in der Tabelle nach den Beispielen angegebenen Formel Nummer 2.

Beispiel 3

Ansatz:
69,7 g (0,1 mol) Fluoralkohol wie im Beispiel 1 hergestellt
28,5 g (0,05 mol) Triisocyanat wie im Beispiel 2
96,1 g (0,025 mol) Polysiloxan der Formel

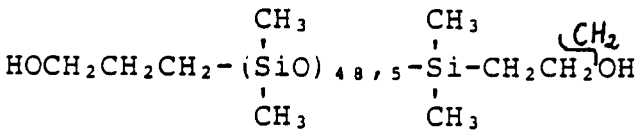

Durchführung: wie im Beispiel 1
Die erhaltene erfindungsgemäße Urethanverbindung (Ausbeute 96,4 % der Theorie) war ein wachsartiges, braun gefärbtes Produkt. Vergleiche Formel Nummer 3.

Beispiel 4 (nicht erfindungsgemäß)

Ansatz:
67,9 g (0,1 mol) Fluoralkohol wie im Beispiel 1 hergestellt
16,8 g (0,1 mol) Hexamethylendiisocyanat
57,7 g (0,05 mol) Polysiloxan wie im Beispiel 1
Durchführung: wie im Beispiel 1
Die erhaltene Urethanverbindung (Ausbeute 98,7 % der Theorie) war ein wachsartiges, braun gefärbtes Produkt. Vergleiche Formel Nummer 4.

Beispiel 5

Ansatz:
107,8 g (0,2 mol) Fluoralkohol der Formel $(C_8F_{17}\text{-}C_{16}F_{33})\text{-}CH_2CH_2OH$
57,0 g (0,1 mol) Triisocyanat wie im Beispiel 2
57,7 g (0,05 mol) Polysiloxan wie im Beispiel 1
Durchführung: wie im Beispiel 1
Die erhaltene erfindungsgemäße Urethanverbindung (Ausbeute 96,4 % der Theorie) war ein wachsartiges, braun gefärbtes Produkt. Vergleiche Formel Nummer 5.

Beispiel 6

Ansatz:
22,2 g (0,032 mol) Fluoralkohol wie im Beispiel 1 hergestellt
9,1 g (0,016 mol) Triisocyanat wie im Beispiel 2
52,1 g (0,008 mol) Polysiloxan der Formel

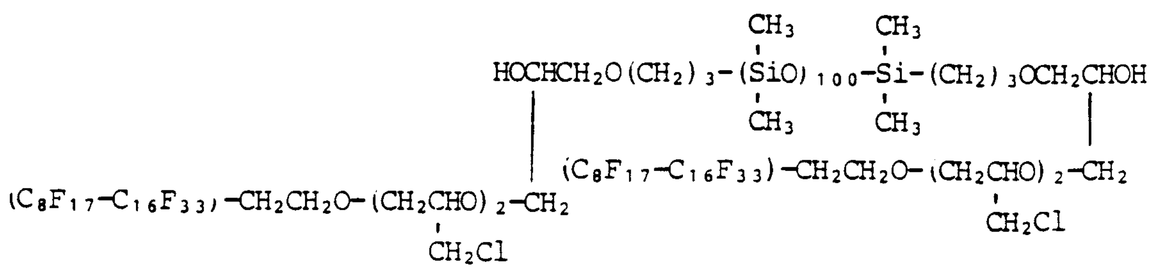

Durchführung: Die Herstellung des Fluoralkohol-Isocyanat-Adduktes erfolgte wie im Beispiel 1. Zur Umsetzung des Adduktes mit dem Polysiloxan wurden zu dem (im Glaskolben befindlichen) Addukt 52,1 g (0,008 mol) des angegebenen Polysiloxans, gelöst in 300 ml 1,2,2-Trifluortrichlorethan, dazugegeben. Die Mischung wurde unter Rühren 5 Stunden lang bei Rückflußtemperatur (das sind 50 bis 60 °C) gehalten und dabei das Alkohol-Isocyanat-Addukt mit dem Polysiloxan umgesetzt. Nach den 5 Stunden Reaktionszeit wurde das Lösungsmittel abdestilliert und der Glaskolbeninhalt zur Nachreaktion unter Rühren 6 Stunden lang bei 110 °C gehalten. Die erhaltene erfindungsgemäße Urethanverbindung (Ausbeute 99,7 % der Theorie) war ein wachsartiges, leicht gelb gefärbtes Produkt. Vergleiche Formel Nummer 6.
Das in diesem Beispiel einzusetzende Polysiloxan kann beispielsweise dadurch erhalten werden, daß man ein mol des Polysiloxans der folgenden Formel

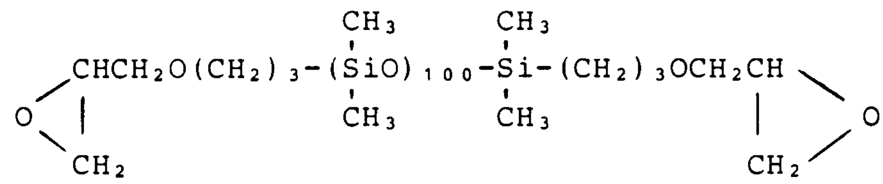

mit 2 mol Fluoralkohol der folgenden Formel

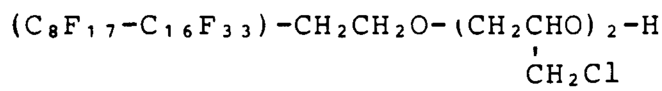

umsetzt. Zur Beschleunigung der Reaktion wird man die Umsetzung in Gegenwart einer Lewis-Säure als Katalysator und unter Verwendung eines Lösungsmittels wie 1,2,2-Trifluortrichlorethan durchführen. Nach Beendingung der Umsetzung liegt das angestrebte, im Beispiel 6 einzusetzende, Polysiloxan vor.

Beispiel 7

Ansatz:
54,0 g (0,08 mol) Fluoralkohol wie im Beispiel 1 hergestellt
22,8 g (0,04 mol) Triisocyanat wie im Beispiel 2
110,0 g (0,02 mol) Polysiloxan der Formel

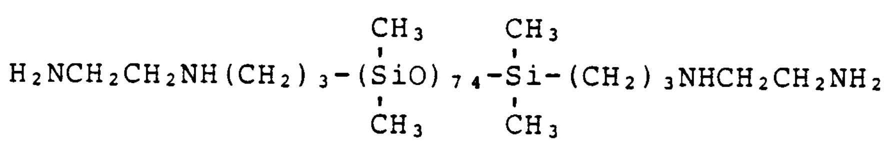

Durchführung: Wie im Beispiel 6, wobei anstelle von 1,2,2-Trifluortrichlorethan Methylethylketon (Siedepunkt 80 °C) als Lösungsmittel verwendet wurde.
Die erhaltene erfindungsgemäße Urethanverbindung (Ausbeute 98,1 % der Theorie) war ein wachsartiges, gelb gefärbtes Produkt. Vergleiche Formel Nummer 7.

Beispiel 8

Ansatz:
20,4 g (0,04 mol) Fluoralkohol wie im Beispiel 5
11,6 g (0,02 mol) Triisocyanat wie im Beispiel 2
55,0 g (0,01 mol) Polysiloxan wie im Beispiel 7
Durchführung: wie im Beispiel 7
Die erhaltende erfindungsgemäße Urethanverbindung (Ausbeute 99,7 % der Theorie) war ein Produkt wie im Beispiel 7. Vergleiche Formel Nummer 8.

Beispiel 9

Ansatz:
20,4 g (0,04 mol) Fluoralkohol wie im Beispiel 5
11,6 g (0,02 mol) Triisocyanat wie im Beispiel 2
55,0 g (0,01 mol) Polysiloxan der Formel

$$H_2NCH_2CH_2NH(CH_2)_3-(\overset{CH_3}{\underset{CH_3}{Si}}O)_{100}-\overset{CH_3}{\underset{CH_3}{Si}}-(CH_2)_3NHCH_2CH_2NH_2$$

Durchführung: wie im Beispiel 7
Die erhaltene erfindungsgemäße Urethanverbindung (Ausbeute 98,9 % der Theorie) war ein Produkt wie im Beispiel 7 Vergleiche Formel Nummer 9.

Beispiel 10

Ansatz:
66,4 g (0,13 mol) Fluoralkohol wie im Beispiel 5
38,0 g (0,064 mol) Triisocyanat wie im Beispiel 2
290,0 g (0,032 mol) Polysiloxan der Formel

$$H_2NCH_2CH_2NH(CH_2)_3-(\overset{CH_3}{\underset{CH_3}{Si}}O)_{120}-\overset{CH_3}{\underset{CH_3}{Si}}-(CH_2)_3NHCH_2CH_2NH_2$$

Durchführung: wie im Beispiel 7
Die erhaltende erfindungsgemäße Urethanverbindung (Ausbeute 98,6 % der Theorie) war ein Produkt wie im Beispiel 7. Vergleiche Formel Nummer 10.

Beispiel 11

Ansatz:
40,3 g (0,076 mol) Fluoralkohol wie im Beispiel 5
23,1 g (0,038 mol) Triisocyanat wie im Beispiel 2
300,0 g (0,019 mol) Polysiloxan der Formel

$$H_2NCH_2CH_2NH(CH_2)_3-(\overset{CH_3}{\underset{CH_3}{Si}}O)_{207}-\overset{CH_3}{\underset{CH_3}{Si}}-(CH_2)_3NHCH_2CH_2NH_2$$

Durchführung: wie im Beispiel 7
Erfindungsgemäße Urethanverbindung: Ausbeute 99,0 % der Theorie. Vergleiche Formel Nummer 11.

Beispiel 12

Ansatz:
102,0 g (0,2 mol) Fluoralkohol wie im Beispiel 5
54,1 g (0,2 mol) Stearylalkohol: $C_{18}H_{37}OH$
115,6 g (0,2 mol) Triisocyanat wie im Beispiel 2
115,3 g (0,1 mol) Polysiloxan wie im Beispiel 1
Durchführung: In dem im Beispiel 1 angegebenen Glaskolben zur Umsetzung von Fluoralkohol mit Isocyanat wurden der oben angegebene Fluoralkohol, der Stearylalkohol, das Triisocyanat und 250 ml Methylethylketon als Lösungsmittel vorgelegt. Die Mischung wurde 5 Stunden lang bei Rückflußtemperatur (das sind 80 bis 90 °C) unter Rühren gehalten. Zur Mischung wurden nun 4 Tropfen Dibutylzinndilaurat dazugegeben, worauf sie zur Nachreaktion 3 Stunden lang wiederum bei Rückflußtemperatur und unter Rühren gehalten wurde. Das erhaltene Fluoralkohol-Isocyanat-Addukt (mit dem Fluoralkohol und dem Stearylalkohol an je einer Isocyanatgruppe) war ein wachsartiges, gelb gefärbtes Produkt. Die Umsetzung des Adduktes mit dem Polysiloxan erfolgte wie im Beispiel 6, jedoch unter Verwendung von Methylethylketon als Lösungsmittel (vergleiche Beispiel 7). Die erhaltene erfindungsgemäße Urethanverbindung (Ausbeute 98,0 % der Theorie) war ein wachsartiges, braun gefärbtes Produkt. Vergleiche Formel Nummer 12.

Beispiel 13

Ansatz:
102,0 g (0,2 mol) Fluoralkohol wie im Beispiel 5
57,8 g (0,1 mol) Triisocyanat wie im Beispiel 2
115,3 g (0,1 mol) Polysiloxan wie im Beispiel 1
Durchführung: Wie im Beispiel 1, mit dem Unterschied, daß anstelle von Acteon Methylethylketon als Lösungsmittel eingesetzt wurde.
Die erhaltene erfindungsgemäße Urethanverbindung (Ausbeute 97,5 % der Theorie) war ein Produkt wie im Beispiel 5. Vergleiche Formel Nummer 13.

TABELLE

| Nr. | Chemische Formeln der Verbindungen der Beispiele 1 und 4 und der ~~Verbindung des Beispiels 4~~ erfindungsgemäßen Verbindungen der Beispiele ~~11~~ 2, 3 und 5 bis 13 |
|---|---|
| 1 | 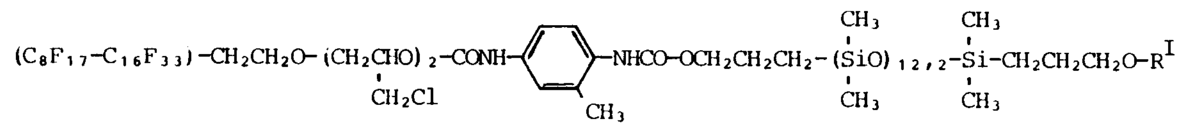 |
| | $R^{I}$ = 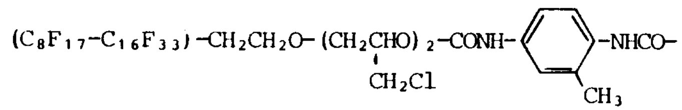 |
| 2 | $[(C_8F_{17}-C_{16}F_{33})-CH_2CH_2O-(CH_2CH(CH_2Cl)O)_2-CONH]_2-A'-NHCO-OCH_2CH_2CH_2-(Si(CH_3)_2O)_{12,2}-Si(CH_3)_2-CH_2CH_2CH_2O-R^{II}$ |
| | $R^{II} = [(C_8F_{17}-C_{16}F_{33})-CH_2CH_2O-(CH_2CH(CH_2Cl)O)_2-CONH]_2-A'-NHCO-$ |
| | A' = 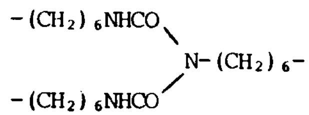 |
| 3 | $[(C_8F_{17}-C_{16}F_{33})-CH_2CH_2O-(CH_2CH(CH_2Cl)O)_2-CONH]_2-A'-NHCO-OCH_2CH_2CH_2-(Si(CH_3)_2O)_{48,5}-Si(CH_3)_2-CH_2CH_2CH_2O-R^{II}$ |

T A B E L L E (Fortsetzung)

| Nr. | Chemische Formeln der erfindungsgemäßen Verbindungen der Beispiele 1 bis 13 |
|---|---|
| 4 | 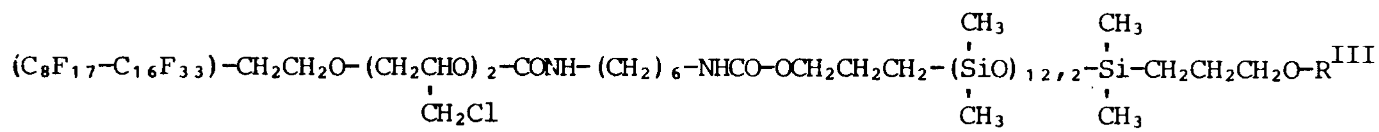 |
| | $R^{III}$ = 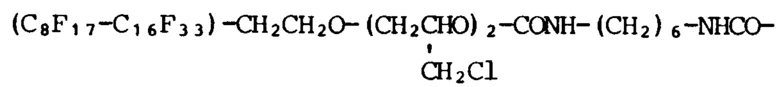 |
| 5 | 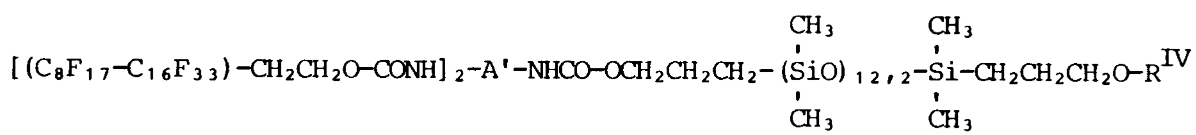 |
| | $R^{IV} = [(C_8F_{17}-C_{16}F_{33})-CH_2CH_2O-CONH]_2-A'-NHCO-$ |
| 6 | 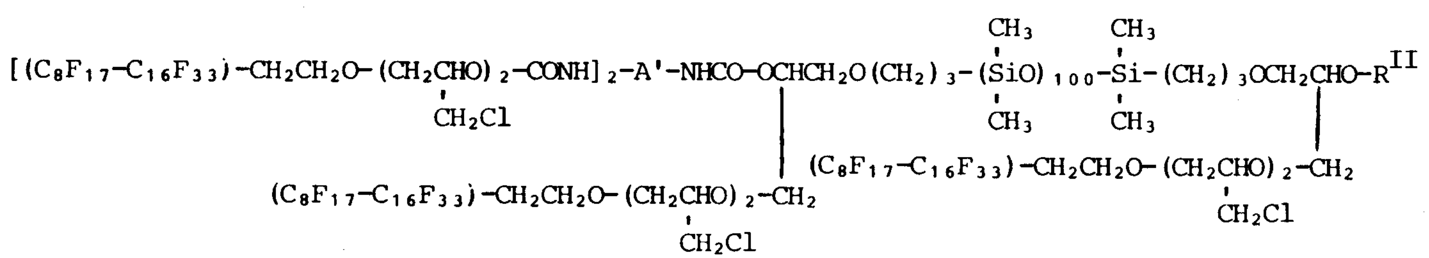 |

T A B E L L E (Fortsetzung)

| Nr. | Chemische Formeln der erfindungsgemäßen Verbindungen der Beispiele 1 bis 13 |
|---|---|
| 7 | $[(C_8F_{17}-C_{16}F_{33})-CH_2CH_2O-(CH_2\underset{CH_2Cl}{C}HO)_2-CONH]_2-A'-NHCO-NHCH_2CH_2NH(CH_2)_3-(\overset{CH_3}{\underset{CH_3}{Si}}O)_{74}-\overset{CH_3}{\underset{CH_3}{Si}}-(CH_2)_3NHCH_2CH_2NH-R^{II}$ |
| 8 | $[(C_8F_{17}-C_{16}F_{33})-CH_2CH_2O-CONH]_2-A'-NHCO-NHCH_2CH_2NH(CH_2)_3-(\overset{CH_3}{\underset{CH_3}{Si}}O)_{74}-\overset{CH_3}{\underset{CH_3}{Si}}-(CH_2)_3NHCH_2CH_2NH-R^{IV}$ |
| 9 | $[(C_8F_{17}-C_{16}F_{33})-CH_2CH_2O-CONH]_2-A'-NHCO-NHCH_2CH_2NH(CH_2)_3-(\overset{CH_3}{\underset{CH_3}{Si}}O)_{100}-\overset{CH_3}{\underset{CH_3}{Si}}-(CH_2)_3NHCH_2CH_2NH-R^{IV}$ |
| 10 | $[(C_8F_{17}-C_{16}F_{33})-CH_2CH_2O-CONH]_2-A'-NHCO-NHCH_2CH_2NH(CH_2)_3-(\overset{CH_3}{\underset{CH_3}{Si}}O)_{120}-\overset{CH_3}{\underset{CH_3}{Si}}-(CH_2)_3NHCH_2CH_2NH-R^{IV}$ |
| 11 | $[(C_8F_{17}-C_{16}F_{33})-CH_2CH_2O-CONH]_2-A'-NHCO-NHCH_2CH_2NH(CH_2)_3-(\overset{CH_3}{\underset{CH_3}{Si}}O)_{207}-\overset{CH_3}{\underset{CH_3}{Si}}-(CH_2)_3NHCH_2CH_2NH-R^{IV}$ |

T A B E L L E (Fortsetzung)

| Nr. | Chemische Formeln der erfindungsgemäßen Verbindungen der Beispiele 1 bis 13 |
|---|---|
| 12 | 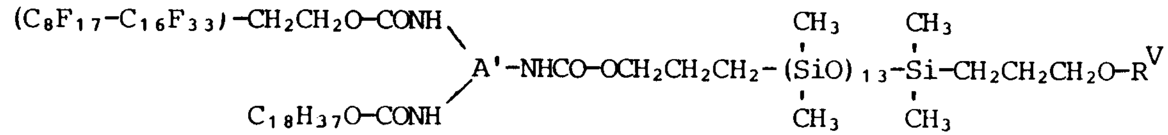 |
| | $R^V$ = 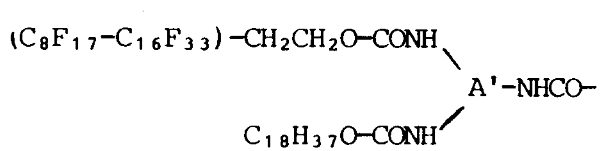 |
| 13 | 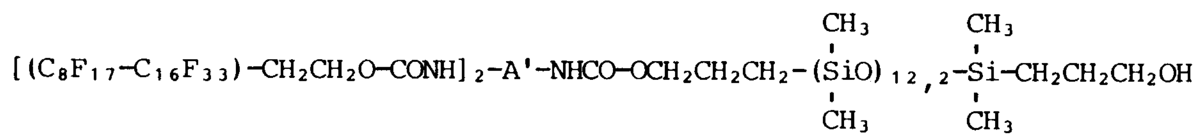 |

Verwendung der erfindungsgemäßen Verbindungen

Beispiele I bis XIII

In diesen Beispielen wurden das Urethan 1 und 4 und die erfindungsgemäßen Urethane 2, 3 und 5 bis 13 mit Hilfe einer aus den Urethanen bereiteten Lösung getestet. Die Lösungen bestanden aus 1 bis 3 g Urethan und 100 g Methylethylketon. Mit jeder der 13 Lösungen (Flotten) wurde ein jeweils gleiches Gewebe aus Polyamid und ein jeweils gleiches Gewebe aus Baumwolle behandelt, indem das Gewebe in üblicher Weise in die Flotte getaucht, mit einem Foulard eine Flottenaufnahme von 30 bis 40 Gew.-% eingestellt, das Keton-feuchte Gewebe zunächst luftgetrocknet und dann 30 Sekunden lang bei einer Temperatur von 150 °C gehalten wurde (Kondensation). Nach dieser Behandlung lagen 26 Gewebe (13 Polyamid-Gewebe und 13 Baumwoll-Gewebe) mit den Urethanen 1 bis 13 vor, wobei auf jedem Gewebe eine Fluorauflage von 0,2 Gew.-% vorhanden war, Gewichtsprozente bezogen auf das Gewicht des Gewebes. An den 26 Geweben wurden die Ölabweisung nach dem AATCC-Test 118 - 1966, die Wasserabweisung nach dem AATCC-Test 22 - 1952 und die Weichgriffeigenschaft durch eine manuelle Prüfung getestet.

Beim AATCC-Test 118 - 1966 (American Association of Textile Chemists and Colorists) werden bekanntlich 3 Tropfen von einer bestimmten Testflüssigkeit (siehe unten) vorsichtig auf das zu prüfende Textilmaterial aufgelegt. Die Einwirkungszeit ist 30 Sekunden. Es wird der Wert angegeben bei dem noch keine augenscheinliche Benetzung des Gewebes unter den Tropfen (nach abgelaufener Einwirkungszeit) hervorgerufen worden ist:

| Testflüssigkeit | Ölabweisungswert |
|---|---|
| Paraffinöl | 1 |
| Paraffinöl : n-Hexadecan = 65:35 | 2 |
| n-Hexadecan | 3 |
| n-Tetradecan | 4 |
| n-Dodecan | 5 |
| n-Decan | 6 |
| n-Octan | 7 |
| n-Heptan | 8 |

Ein Ölabweisungswert von 1 bedeutet den schlechtesten und ein Ölabweisungswert von 8 den besten Abweisungseffekt.

Beim AATCC-Test 22 - 1952 werden bekanntlich die zu prüfenden Textilien unter standardisierten Bedingungen beregnet. Es wird der Wasserabperleffekt visuell mit den Noten 0 bis 100 beurteilt, wobei die Note 0 den schlechtesten und die Note 100 den besten Abperleffekt bedeutet.

Die Weichgriffeigenschaft wurde durch eine manuelle Prüfung beurteilt, wobei die Noten 0 bis 3 gegeben wurden; die Note 0 besagt, daß keine nennenswerte Weichheit vorliegt, die Note 1 besagt, daß das Gewebe deutlich weicher ist als ein unbehandeltes Gewebe, die Note 2 weist auf eine noch höhere Weichgriffeigenschaft hin und die Note 3 besagt, daß die Weichheit besonders groß ist (weich wie Wolle).

Die Ergebnisse der Prüfungen sind nachstehend zusammengefaßt.

| Beispiel und getestete Urethanverbindung | Ölabweisung | | Wasserabweisung | | Weichgriffeigenschaft | |
|---|---|---|---|---|---|---|
| | (1) | (2) | (1) | (2) | (1) | (2) |
| I/1 | 4 | 4 | 80 | 70 | 1 | 1 |
| II/2 | 6 | 6 | 90 | 80 | 1 | 1 |
| III/3 | 5 | 5 | 90 | 80 | 2 | 2 |
| IV/4 | 4 | 4 | 80 | 80 | 1 | 1 |
| V/5 | 6 | 5 | 100 | 100 | 1 | 1 |
| VI/6 | 6 | 6 | 90 | 80 | 2 | 2 |
| VII/7 | 5 | 5 | 90 | 90 | 2 | 2 |
| VIII/8 | 6 | 5 | 100 | 100 | 3 | 3 |
| IX/9 | 7 | 6 | 100 | 100 | 2 | 2 |
| X/10 | 6 | 6 | 100 | 90 | 3 | 3 |
| XI/11 | 6 | 5 | 90 | 80 | 3 | 3 |
| XII/12 | 7 | 6 | 80 | 80 | 1 | 1 |
| XIII/13 | 7 | 6 | 80 | 80 | 1 | 1 |
| (1) = Polyamid-Gewebe<br>(2) = Baumwoll-Gewebe | | | | | | |

Die Testergebnisse zeigen, daß mit den erfindungsgemäßen Urethanen eine gute Oleophobie und Hydrophobie und eine gute Weichgriffeigenschaft erreicht wird. Aufgrund des speziellen Weichgriffes weisen die mit den erfindungsgemäßen Urethanen ausgerüsteten Textilien auch gute Elastizitätseigenschaften auf.

Die erfindungsgemäßen Fluor und Polysiloxan enthaltende Urethane eignen sich auch zur Behandlung und Ausrüstung von Leder, Pelzen und Holz, insbesondere zur Lederausrüstung. Diese erfindungsgemäße Verwendung der neuen Urethane wird im folgenden anhand von Leder noch näher beschrieben. Als Beispiele für Leder seien Rind-, Ziegen-, Schaf- und Schweineleder genannt. Die Auftragsmenge an erfindungsfemäßem Urethan (Wirkstoff) wird so gewählt, daß 0,05 bis 2 g Wirkstoff pro Quadratmeter Leder vorliegen, vorzugsweise 0,1 bis 1,5 g Wirkstoff pro Quadratmeter Leder. Zum Aufbringen können die üblichen Arbeitsweisen zur oleophoben und hydrophoben Ausrüstung von Leder eingesetzt werden. Bevorzugt wird die Spritztechnik verwendet, wobei der Wirkstoff in Form einer Lösung auf das zu behandelnde Leder aufgesprüht wird. Geeignete Lösungsmittel sind Alkanole, wie Isopropanol, Aceton, Essigsäureester, wie Butylacetat oder Mischungen von beispielsweise Alkanolen und Heptan. Die Konzentration an Wirkstoff in der zur Behandlung bereiteten Lösung liegt im allgemeinen bei 0,1 bis 2 Gew.-%, vorzugsweise 0,3 bis 1 Gew.-%, Gewichtsprozente bezogen auf da Gewicht der Lösung. Das Aufsprühen der Wirkstoff enthaltenden Lösung auf das Leder wird in der Regel mit Hilfe von Treibgas, beispielsweise Propan, Butan, Fluorkohlenwasserstoffe und dergleichen, oder mit Hilfe von speziellen Sprühvorrichtungen ohne Treibgas durchgeführt, wobei die oben angegebene Menge an Wirkstoff aufgebracht wird. Nach Trocknung liegt das erfindungsgemäß ausgerüstete Leder vor.

## Patentansprüche

**1.** Fluor und Polysiloxan enthaltende Urethane der folgenden Formel 1

$$B-X-R_1-(\underset{R}{\overset{R}{Si}}O)_y-\underset{R}{\overset{R}{Si}}-R_1-X-B' \qquad (1)$$

worin bedeuten

R $CH_3$ oder $C_2H_5$,

y eine Zahl von 5 bis 500,

B einen Rest der folgenden Formel 2

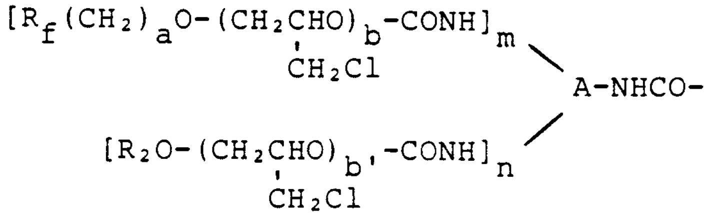 (2)

worin bedeuten

$R_f$ einen Perfluoralkylrest mit 4 bis 20 C-Atomen, einen ω-H-Perfluoralkylrest mit 4 bis 20 C-Atomen, oder einen Rest der Formel $R_f' SO_2NR_3$ oder der Formel $R_f' CH_2CH_2SO_2NR_3$, worin $R_f'$ ein Perfluoralkylrest mit 4 bis 20 C-Atomen und $R_3$ = H oder ein $C_{1-4}$-Alkyl ist,

$R_2$ einen Alkylrest mit 4 bis 20 C-Atomen,

a eine ganze Zahl von 1 bis 4,

b eine Zahl von 0 bis 10,

b' eine Zahl von 0 bis 10,

m eine Zahl von 1 bis 2 und

n eine Zahl von 0 bis 1, wobei die Summe aus m + n 2 ist, und

A einen Rest entsprechend der folgenden Formel 3

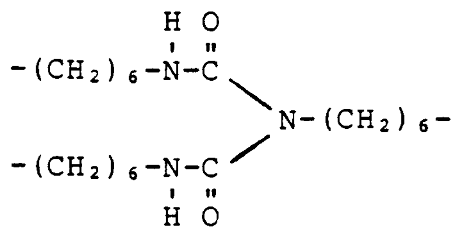 (3)

B' H oder ebenfalls einen Rest der Formel 2,

X O oder $NR_4$, worin $R_4$ = H oder ein $C_{1-4}$-Alkyl ist, und

$R_1$-X einen Rest entsprechend einer der folgenden Formeln 4 bis 7

( 4 ) $-(CH_2)_z-X-$

( 5 ) $-(CH_2)_{z'}O(CH_2)_z-X-$

( 6 ) $-(CH_2)_{z'}NR_4(CH_2)_z-X-$

( 7 ) 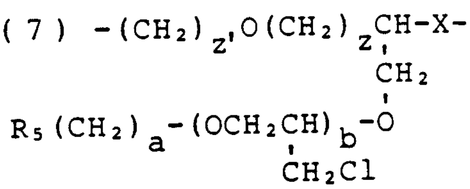

worin z und z' jeweils eine ganze Zahl von 1 bis 10 ist, $R_5$ eine der Bedeutungen von $R_2$ oder von $R_f$ hat und X, $R_4$, a und b die genannten Bedeutungen haben.

**2.** Fluor und Polysiloxan enthaltende Urethane nach Anspruch 1, worin bedeuten

R $CH_3$ oder $C_2H_5$,

y eine Zahl von 10 bis 300,

B einen Rest der Formel 2, worin bedeuten

$R_f$ einen Perfluoralkylrest mit 6 bis 16 C-Atomen,

$R_2$ einen Alkylrest mit 10 bis 18 C-Atomen,

a 2,

b 0 oder 1 bis 5,

b' 0 oder 1 bis 5,
m 2 und
n 0 und
A einen Rest ensprechend der Formel 3
B' H oder einen Rest der Formel 2 mit den angegebenen Bedeutungen zur Formel 2,
X O oder $NR_4$, worin $R_4$ = H oder ein $C_{1-4}$-Alkyl ist, und
$R_1$-X einen Rest entsprechend den Formeln 4, 6 und 7, wobei z und z' jeweils eine ganze Zahl von 1 bis 5 ist, $R_5$ die angegebene Bedeutung von $R_2$ oder von $R_f$ hat und X, $R_4$, a und b die angegebenen Bedeutungen haben.

**3.** Verfahren zur Herstellung der Fluor und Polysiloxan enthaltenden Urethane der Ansprüche 1 bis 2, dadurch gekennzeichnet, daß ein Fluoralkohol-Isocyanat-Addukt der folgenden Formel 8

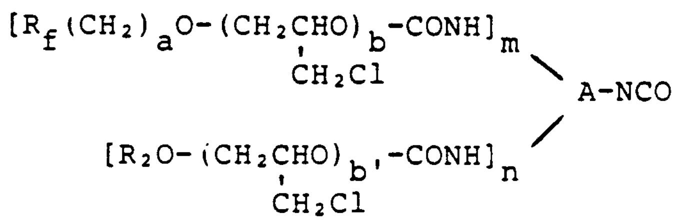
( 8 )

worin $R_f$, $R_2$, a, b, b', m, n und A die in Anspruch 1 oder 2 genannten Bedeutungen haben, mit einem Polysiloxan der folgenden Formel 9

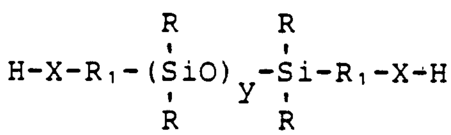
( 9 )

worin R, X, $R_1$-X und y die in Anspruch 1 oder 2 genannten Bedeutungen haben, im Molverhältnis von 1 bis 2 zu 1 bei einer Temperatur von 30 bis 130 °C umgesetzt wird.

**4.** Verwendung der Fluor und Polysiloxan enthaltenden Urethane nach den Ansprüchen 1 bis 2 zur Ausrüstung von Textilien, Leder, Pelzen und Holz.

**Claims**

**1.** Urethanes containing fluorine and polysiloxane having the following formula 1

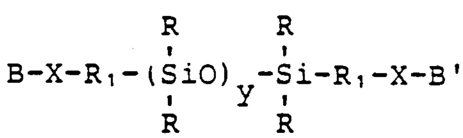
(1)

in which
R denotes $CH_3$ or $C_2H_5$,
y denotes a number from 5 to 500,
B denotes a radical of the following formula 2

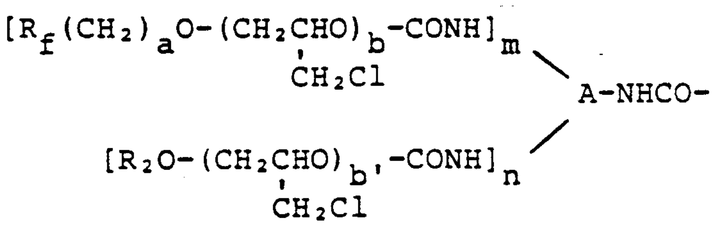

(2)

in which

- $R_f$ denotes a perfluoroalkyl radical with 4 to 20 carbon atoms, an ω-H-perfluoroalkyl radical with 4 to 20 carbon atoms, or a radical of the formula $R_f'SO_2NR_3$ or of the formula $R_f'CH_2CH_2SO_2NR_3$, in which $R_f'$ is a perfluoroalkyl radical with 4 to 20 carbon atoms and $R_3$ = H or $C_{1-4}$-alkyl,
- $R_2$ denotes an alkyl radical with 4 to 20 carbon atoms,
- a denotes an integer from 1 to 4,
- b denotes a number from 0 to 10,
- b' denotes a number from 0 to 10,
- m denotes a number from 1 to 2 and
- n denotes a number from 0 to 1, the sum of m + n being 2, and
- A denotes a radical corresponding to the following formula 3

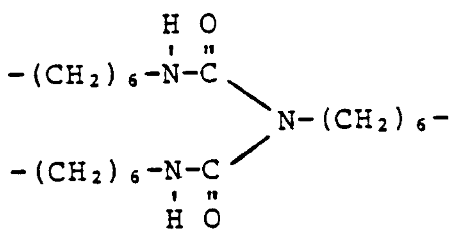

(3)

- B' denotes H or likewise denotes a radical of the formula 2,
- X denotes O or $NR_4$, in which $R_4$ = H or $C_{1-4}$-alkyl,and
- $R_1$-X denotes a radical corresponding to one of the following formulae 4 to 7

( 4 ) $-(CH_2)_z-X-$

( 5 ) $-(CH_2)_{z'}O(CH_2)_z-X-$

( 6 ) $-(CH_2)_{z'}NR_4(CH_2)_z-X-$

( 7 ) 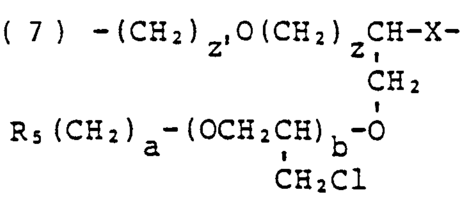

in which z and z' are each an integer from 1 to 10, $R_5$ has one of the meanings of $R_2$ or of $R_f$ and X, $R_4$, a and b have the meanings given.

**2.** Urethanes containing fluorine and polysiloxane as claimed in claim 1, in which

- R denotes $CH_3$ or $C_2H_5$,
- y denotes a number from 10 to 300,
- B denotes a radical of the formula 2, in which
- $R_f$ denotes a perfluoroalkyl radical with 6 to 16 carbon atoms,
- $R_2$ denotes an alkyl radical with 10 to 18 carbon atoms,
- a denotes 2,
- b denotes 0 or 1 to 5,

b' denotes 0 or 1 to 5,
m denotes 2 and
n denotes 0, and
A denotes a radical corresponding to formula 3 ,
B' denotes H or a radical of the formula 2 with the meanings given for formula 2,
X denotes O or $NR_4$, in which $R_4$ = H or is $C_{1-4}$-alkyl,and
$R_1$-X denotes a radical corresponding to formulae 4, 6 and 7 , in which z and z' are each an integer from 1 to 5, $R_5$ has the meaning given for $R_2$ or for $R_f$ and X, $R_4$, a and b have the meanings given.

**3.** A process for the preparation of the urethanes containing fluorine and polysiloxane as claimed in either of claims 1 and 2, which comprises reacting a fluoroalcohol-isocyanate adduct of the following formula 8

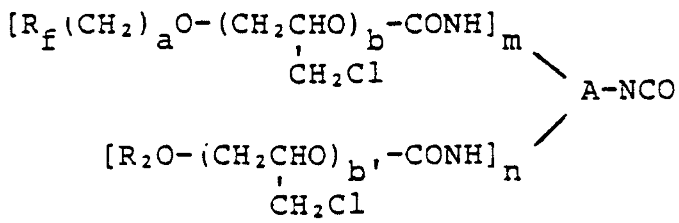
( 8 )

in which $R_f$, $R_2$, a, b, b', m, n and A have the meanings mentioned in claim 1 or 2, with a polysiloxane of the following formula 9

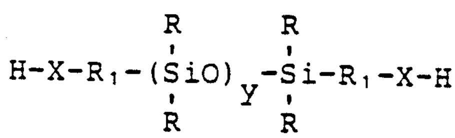
( 9 )

in which R, X, $R_1$-X and y have the meanings in claim 1 or 2, in a molar ratio of 1 to 2 : 1 at a temperature of 30 to 130 ° C.

**4.** The use of the urethanes containing fluorine and polysiloxane as claimed in either of claims 1 and 2 for the treatment of textiles, leather, skins and wood.

**Revendications**

**1.** Uréthannes contenant du fluor et du polysiloxane et répondant à la formule suivante 1

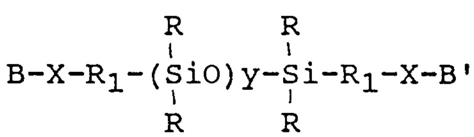
(1)

dans laquelle :
R représente un groupe $CH_3$ ou $C_2H_5$,
y est un nombre valant 5 à 500,
B est un reste répondant à la formule 2 suivante:

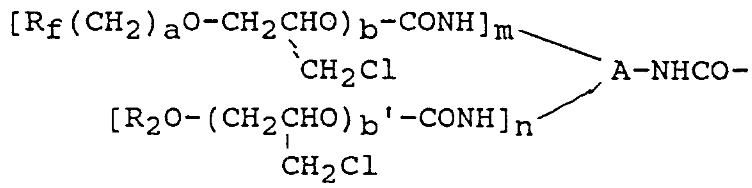

(2)

dans laquelle

$R_f$ représente un reste perfluoro-alkyle ayant 4 à 20 atomes de C, un reste oméga-H-perfluoroalkyle ayant 4 à 20 atomes de C, ou un reste de formule $R'_fSO_2NR_3$ ou de formule $R'_fCH_2CH_2SO_2NR_3$, dans laquelle $R'_f$ représente un reste perfluoro-alkyle ayant 4 à 20 atomes de carbone et $R_3$ représente un atome de H ou un groupe alkyle en $C_1$ à $C_4$,

$R_2$ est un reste alkyle ayant 4 à 20 atomes de carbone,
a est un nombre entier valant 1 à 4,
b est un nombre valant 0 à 10,
b' est un nombre valant 0 à 10,
m est un nombre valant 1 à 2, et
n est un nombre valant de 0 à 1, la somme (m + n) valant 2, et
A est un reste répondant à la formule 3 suivante:

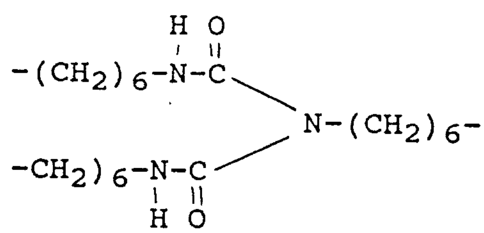

(3)

B' représente H ou éventuellement un reste de formule (2),
X représente O ou $NR_4$, formule dans laquelle $R_4$ représente H ou un groupe alkyle en $C_1$ à $C_4$, et,
$R_1$-X représente un reste répondant à l'une des formules 4 à 7 suivantes:

( 4 ) $-(CH_2)_z-X-$

( 5 ) $-(CH_2)_{z'}O(CH_2)_z-X-$

( 6 ) $-(CH_2)_{z'}NR_4(CH_2)_z-X-$

( 7 ) 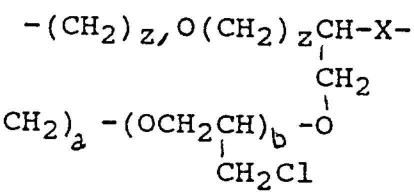

dans lesquelles z et z' représentent chacun un nombre entier valant 1 à 10; $R_5$ a l'un des sens de $R_2$ ou de $R_f$, et X, $R_4$, a et b ont les sens indiqués.

2. Uréthannes contenant du fluor et des groupes polysiloxanes selon la revendication 1, dans lesquelles :
R représente $CH_3$ ou $C_2H_5$,
y est un nombre valant 10 à 300,
B représente un reste de formule 2, dans laquelle
$R_f$ représente un reste perfluoro-alkyle ayant 6 à 16 atomes de carbone,
$R_2$ représente un reste alkyle ayant 10 à 18 atomes de carbone,
a vaut 2,
b vaut 0 ou 1 à 5

b' vaut 0 ou 1 à 5,
m vaut 2, et
n est nul et
A représente un reste répondant à la formule 3
B' représente H ou un reste de formule 2, ayant les sens indiqués pour la formule 2,
X représente O ou $NR_4$, formule dans laquelle $R_4$ représente H ou un reste alkyle en $C_1$ à $C_4$, et
$R_1$-X représente un reste répondant aux formules 4,6 et 7, dans lesquelles z et z' représentent à chaque fois un nombre entier valant 1 à 5, $R_5$ a le sens indiqué pour $R_2$ ou pour $R_f$, et X , $R_4$, a et b ont les sens indiqués.

**3.** Procédé pour produire les uréthannes contenant du fluor et du polysiloxane selon les revendications 1 à 2, procédé caractérisé en ce qu'on fait réagir, à une température de 30 à 130 °C, un produit d'addition d'isocyanate et d'alcool fluoré, répondant à la formule 8 suivante :

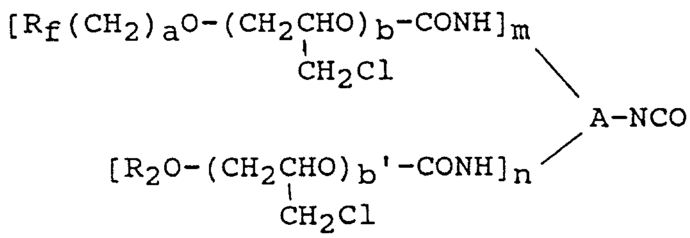

(8)

(dans laquelle $R_f$, $R_2$, a, b, b',m, n et A ont les sens indiqués à la revendication 1 ou à la revendication 2) avec un polysiloxane de formule 9 suivante :

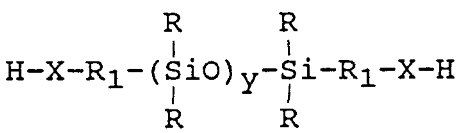

(9)

(dans laquelle, R, X, $R_1$-X et y ont les sens indiqués à la revendication 1 ou 2) selon un rapport molaire de 1 à 2 pour 1.

**4.** Utilisation des uréthannes contenant du fluor et du polysiloxane, selon les revendications 1 à 2, pour le traitement de textiles, du cuir, de peaux et fourrures et du bois .